(19) **Europäisches Patentamt / European Patent Office / Office européen des brevets**

(11) **EP 4 107 080 B1**

(12) **EUROPEAN PATENT SPECIFICATION**

(45) Date of publication and mention
of the grant of the patent:
**09.04.2025  Bulletin 2025/15**

(21) Application number: **21712900.6**

(22) Date of filing: **19.02.2021**

(51) International Patent Classification (IPC):
**B65B 19/22** *(2006.01)*          **B65B 57/00** *(2006.01)*
**B65B 57/10** *(2006.01)*          **B65B 57/18** *(2006.01)*
**G05B 19/4067** *(2006.01)*

(52) Cooperative Patent Classification (CPC):
**B65B 57/005; B65B 19/223; B65B 57/00;
B65B 57/10; B65B 57/18; G05B 19/4061;**
G05B 2219/49153

(86) International application number:
**PCT/IB2021/051436**

(87) International publication number:
**WO 2021/165912 (26.08.2021 Gazette 2021/34)**

(54) **A PROCEDURE FOR THE SELECTIVE MANAGEMENT OF THE ALARMS OF AN AUTOMATIC MACHINE FOR MANUFACTURING OR PACKING CONSUMER ARTICLES**

VERFAHREN ZUM SELEKTIVEN MANAGEMENT DER ALARME EINER AUTOMATISCHEN MASCHINE ZUR HERSTELLUNG ODER VERPACKUNG VON VERBRAUCHERARTIKELN

UNE PROCÉDURE DE GESTION SÉLECTIVE DES ALARMES D'UNE MACHINE AUTOMATIQUE POUR LA FABRICATION OU L'EMBALLAGE D'ARTICLES DE CONSOMMATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.02.2020  IT 202000003482**

(43) Date of publication of application:
**28.12.2022  Bulletin 2022/52**

(73) Proprietor: **G.D SOCIETA' PER AZIONI**
**40133 Bologna (IT)**

(72) Inventors:
• **ZANNI, Paolo**
  **40133 Bologna (IT)**

• **NAPOLI, Alfredo**
  **40133 Bologna (IT)**
• **SALMI, Stefano**
  **40133 Bologna (IT)**
• **GAMBERINI, Giuliano**
  **40133 Bologna (IT)**

(74) Representative: **Studio Torta S.p.A.**
**Via Viotti, 9**
**10121 Torino (IT)**

(56) References cited:
**EP-A1- 0 182 917          EP-A2- 0 104 409
WO-A1-2019/202568          DE-A1- 10 343 611
DE-A1- 102006 007 623      US-A- 5 157 595**

**Description**

CROSS-REFERENCE TO RELATED APPLICATIONS

This patent application claims priority from Italian patent application no. 102020000003482 filed on 20/02/2020

TECHNICAL FIELD

The present invention relates to a procedure for the selective management of the alarms of an automatic machine for manufacturing or packing consumer articles.

The present invention finds an advantageous, but not exclusive, application in the selective management of the alarms of an automatic packaging machine that manufactures packets of cigarettes, to which the following discussion will explicitly refer without thereby losing generality.

PRIOR ART

An automatic packaging machine and method is disclosed e.g. in document WO2019202568.

An automatic cigarette packaging machine comprises a plurality of actuators, which act on the articles to modify the shape, structure, or position thereof and each actuator can assume a plurality of different positions.

Generally, the actuators are electric motors or pneumatic cylinders and are connected integrally to mechanical parts of different shapes and sizes suitable for processing the articles. In case of incorrect operation (for example due to a fault, i.e., an unexpected and unwanted event, an alarm, an overload, etc.) two or more actuators can collide, and therefore result, in given cases, in causing interference (mechanical stops) between the mechanical parts connected thereto, thus risking to cause the breakage or damage of said mechanical parts or of the articles on which they are working.

During the manufacturing of consumer articles, it may happen that one of the actuators of the automatic machine enters a state of alarm (for example due to overfeeding, material breakage, malfunction, exceeding a maximum allowed following error, etc.). In these cases, to avoid mechanical interference, a general stop is generally carried out, i.e., all the actuators of the automatic machine are stopped. In particular, as soon as the shutdown is complete, a safety system disables the actuators, denying them power and therefore preventing any positions of interference from being forcedly held.

Although the general stop is effective in terms of safety, it cannot be considered an efficient system for the production restart of the automatic machine. In particular, following the power failure, the actuators may be in undefined positions (i.e., not known to their controllers) and require a procedure for restoring the functional state through which the actuators must be prepared (mobilized) for setting the automatic machine in motion. This is usually a very long operation and affects the performance and recovery time (after a failure) of the automatic machine.

In addition, the general shutdown determines the need to discard the articles with unfinished and non-recoverable processing cycles, often present inside the automatic machine at the instant in which the triggering error is detected.

In the new generation automatic machines, which are usually large in size and process a large quantity of articles at the same time, the rejection of semi-finished articles made necessary following a general stop causes a strong waste of raw materials (from the point of view of the producer) and a high production of waste to be disposed of (from an environmental point of view). This waste activity increases the already abundant recovery time necessary for restoring the functional state (i.e., production) of the automatic machine.

DESCRIPTION OF THE INVENTION

The object of the present invention is to provide a procedure for the selective management of the alarms of an automatic machine for manufacturing or packing consumer articles that is at least partially free from the drawbacks described above and, at the same time, is simple and inexpensive to produce.

According to the present invention, a procedure for the selective management of the alarms of an automatic machine for manufacturing or packing consumer articles is provided, according to what is claimed in the attached claims. An automatic machine for manufacturing or packing consumer articles is also provided configured to carry out the aforementioned procedure.

The claims describe preferred embodiments of the present invention forming an integral part of the present description.

BRIEF DESCRIPTION OF THE DRAWINGS

The present invention will now be described with reference to the attached drawings, which illustrate some non-limiting embodiments thereof, wherein:

- Figure 1 is a perspective and schematic view of an automatic machine for manufacturing articles for the tobacco industry;
- Figure 2 is a schematic and plan view of a part of the automatic machine of Figure 1 in which a first and a second actuator have positions of possible interference one relative to the other;
- Figure 3 illustrates a possible interference matrix relative to the part of the machine of Figure 2; and
- Figure 4 is a diagram illustrating the possible management of an alarm of one of the actuators of an automatic machine according to the present invention.

PREFERRED EMBODIMENTS OF THE INVENTION

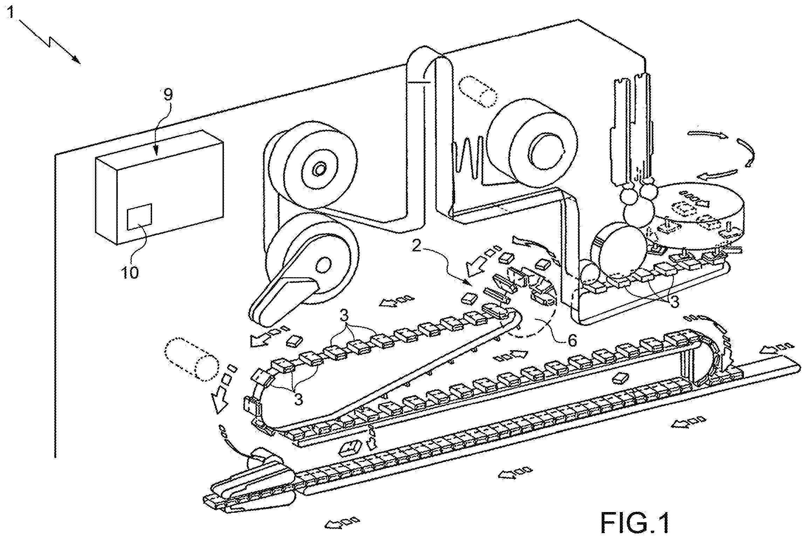

Figure 1 illustrates an automatic machine 1 for manufacturing articles for the tobacco industry, in particular an automatic packaging machine 1 for applying a transparent overwrap to packets of cigarettes.

The automatic machine 1 comprises various parts designed to carry out processing on the articles (packets 3 of cigarettes in the embodiment illustrated in Figure 1). In particular, the automatic machine 1 comprises a part 2 provided with a plurality of actuators (at least two) 4 and 5, each capable of assuming a plurality of different positions and moving, during the manufacturing, with a nominal movement (NM) of its own, i.e., it performs a standard movement (in particular following a predefined position or speed profile).

According to some preferred but non-limiting embodiments, the actuators 4 and 5 comprise electric motors (in particular of the *brushless* type). According to further embodiments not illustrated, the actuators 4 and 5 also comprise types of drives different from electric motors (for example electrically actuated cylinders, etc.).

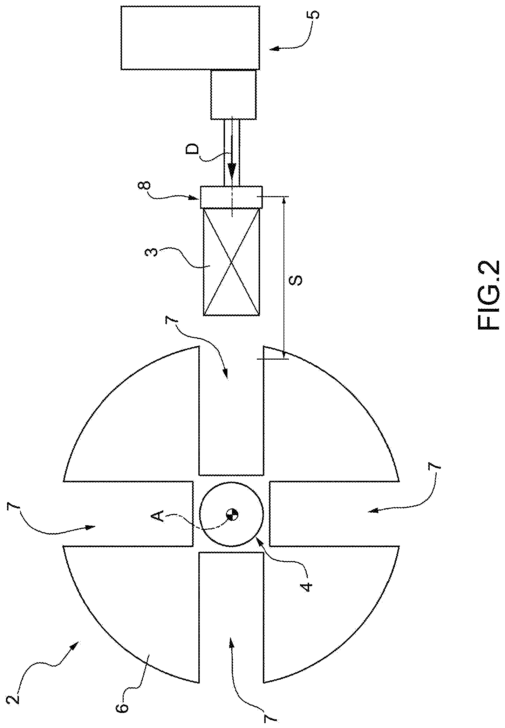

The part 2 of the automatic machine 1 of Figure 1 is illustrated in plan and schematically in Figure 2. Said part 2 comprises: a wheel 6 rotatably mounted around a central rotation axis A and provided with seats 7 (in particular pockets) designed to receive the packets 3 of cigarettes and (at least) a pusher 8 designed to push the packets 3 inside the seats 7 of the movable wheel 6.

In the non-limiting embodiment illustrated in Figure 2, two actuators 4 and 5 are provided: a first actuator 4 is coupled to the wheel 6 to control the rotation of the wheel 6 around the rotation axis A and is provided with a rotating electric motor (for example of the *brushless* type), which rotates the wheel 6 by means of the interposition of a reducer (not illustrated); a second actuator 5 is coupled to the pusher 8 to control the linear movement of the pusher 8 along a direction D and for a predefined stroke S and is provided with a rotating electric motor (for example of the *brushless* type) and a reducer which transforms the circular movement into linear movement (alternatively the second actuator 5 could comprise a linear electric motor or a pneumatic/hydraulic cylinder).

The part 2 of the automatic machine 1 therefore has two actuators 4 and 5, which can generate interference positions (or interference). With the terminology "interference positions" (or "interference") we mean all those combinations of positions of the actuators 4 and 5 that generate collisions between the mechanical components of the automatic machine (for example between the wheel 6 and the pusher 8 and/or a packet 3 which is interposed between the wheel 6 and the pusher 8).

In some cases, an actuator 4 or 5 can be in positions that do not allow the other actuator 5 or 4 to move freely (i.e., they do not allow the other actuator to assume any of its possible positions) as they would generate collisions.

In some non-limiting and not illustrated cases, the actuator 4 of the wheel 6 is in a position in which the pusher 8 is not allowed to enter with the product (packet 3) in one of the seats 7. Consequently, the actuator 5 of the pusher 8 cannot, in these cases, move freely (i.e., it cannot make the pusher 8 assume any of its possible positions along the stroke S) since it could generate a collision between the pusher 8 and the wheel 6, as the wheel 6 is in a position not suitable for the pusher 8 to insert the packet 3 into the seat 7. In other words, given the position of the actuator 4 of the wheel 6, if the actuator 5 of the pusher 8 moves along its stroke S to try to insert the packet 3 inside one of the seats 7, the packet 3 first, and eventually the pusher 8 after, would collide with the wheel 6, generating waste of material and a possible/probable breakage of mechanical components. However, said combination of positions of the actuators 4 and 5 allows free movement to the actuator 4 of the wheel 6, since, by turning the wheel 6, no collision would be caused between the wheel 6 and the pusher 8 or a packet 3.

In other non-limiting cases, however, an actuator 4 or 5 may be in positions which allow the other actuator 5 or 4 to move freely (i.e., allow the other actuator 5 or 4 to assume any of its possible positions) without generating collisions. As illustrated in Figure 2, the actuator 4 of the wheel 6 is in a position in which the pusher 8 is allowed to enter with the product (the packet 3) into one of the seats 7. Consequently, the actuator 5 of the pusher 8 can move freely (i.e., it can assume any of its possible positions along the stroke S) without generating any collision between the pusher 8 and the wheel 6, as the wheel 6 is in a position suitable for inserting the packet 3 in the seat 7 by means of the pusher 8. In other words, given the position of the actuator 4 of the wheel 6, if the actuator 5 of the pusher 8 moves along its stroke S to insert the packet 3 inside one of the seats 7, it does not generate any collision between the packet 3 and/or the pusher 8 with the wheel 6. However, this combination of positions of the actuators 4 and 5 does not allow free movement of the actuator 4 of the wheel 6, since, making the wheel 6 turn, would cause a collision between the wheel 6 and the packet 3 in the case in which the packet 3 was only partially inserted into the seat 7, or it would cause a collision between the wheel 6 and the pusher 8 if the packet 3 was completely inserted and the pusher 8 was partially inside the seat 7. In both cases it would be necessary to stop and reset the automatic machine 1 and in the second case a breakage of mechanical components would also be probable.

Advantageously but not necessarily, the automatic machine 1 also comprises a control unit 9 configured to control (at least) the actuators 4 and 5. In particular, the control unit 9 comprises a memory 10 inside which an interference matrix 11 is stored, which indicates, for each position of an actuator 4 or 5, the presence or absence of interference relative to all possible positions of the other actuator.

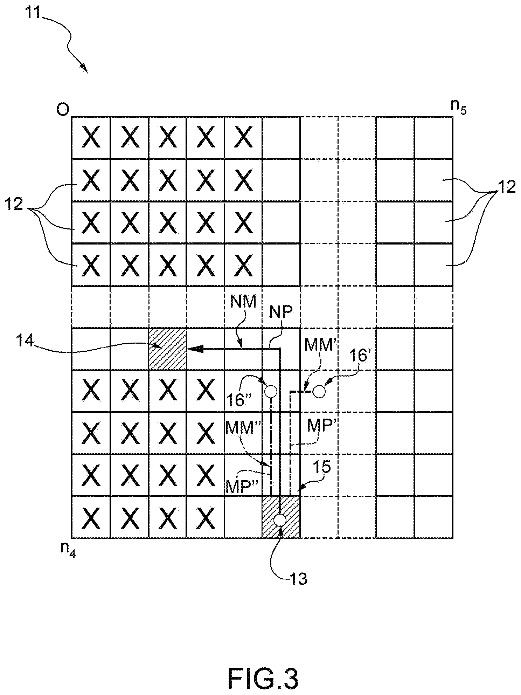

In Figure 3, number 11 denotes as a whole an interference matrix, which indicates, for each position of the two actuators 4 and 5, the presence or absence of interference positions (or interference) relative to all the possible positions of the other actuator. That is, in the interference matrix 11 all the possible positions ($n_4$) of the actuator 4 of the wheel 6 are shown on the ordinate axis and all the possible positions ($n_5$) of the actuator 5 of the pusher 8 are shown on the abscissa axis. In other words, the entire stroke of each actuator 4 or 5 is divided into a finite number of positions and this finite number of positions is arbitrary and depends on the degree of resolution that is desired: for example in the case of the actuator 4 of the wheel 6 a freedom of actuation is possible along the entire round angle and therefore the stroke of the actuator 4 can be divided into 360 positions (1° away one from the other), it can be divided into 72 positions (5° away one from the other) or it can be divided into 720 positions (0.5° away one from the other); instead, in the case of the actuator 5 of the pusher 8 the stroke S can be divided into positions 1 mm away one from the other, in positions 1 cm away one from the other, in positions 0.2 mm away one from the other .... In the interference matrix 11 of Figure 3, some rows and some columns are denoted by dashed lines, to indicate the possible presence of a different number of rows or columns depending on the desired resolution for each actuator 4 and 5. Generally, the resolution used for each actuator 4 and 5 is approximately equal to the accuracy of the actuator 4 and 5 itself, i.e., it makes no sense to use a resolution of the order of microns if an actuator 4 or 5 has an accuracy of the order of centimetres and vice versa.

The interference matrix 11 is provided with a plurality of boxes 12, each relative to a pair of positions of the actuators 4 and 5, i.e., it relates to a corresponding position of the actuator 4 associated with a corresponding position of the actuator 5. Given a position of the actuator 4 or 5, the interference matrix 11 indicates, on the basis of this position of the actuator 4 or 5, whether for each position of the actuator 5 or 4 (which together form a row or column of the interference matrix 11) an interference condition (position) occurs between the mechanical parts in the part 2 of the automatic machine 1.

The interference matrix 11 therefore has a number "n" of boxes 12 equal to the product of the number of positions of the actuators 4 and 5 (i.e., the product between the number of rows and the number of columns). In particular, a value "X" may or may not be present within each box 12. The value "X" within a box 12 indicates that the relative pair of positions causes interference (and therefore said pair of positions is not allowed), since, if both actuators are found to be in those positions there would be a mechanical collision between the mechanical elements (for example between the wheel 6 and the pusher 8) or between the mechanical elements and an article (for example between the wheel 6 and a packet 3).

Obviously, the value "X" can be replaced by any other predefined value, image or symbol having the same function of providing information on the presence of interference given the positions of the actuators 4 and 5.

According to the non-limiting embodiment illustrated in Figure 3, the absence of the value "X" within a box 12 indicates that the relative pair of positions of the two actuators 4 and 5 does not cause interference. In other words, the absence of the value "X" within a box 12 determines that said pair of positions is allowed, as no element of the automatic machine 1 would involuntarily collide with another element.

In the non-limiting embodiment of Figure 3, each actuator 4 or 5, performs the respective nominal movement (respectively along the ordinate axis and along the abscissa axis) which determines a nominal path NP on the interference matrix 11. The nominal movement of the actuators 4 and 5 determines the passage, in the interference matrix 11, from an initial position 13 to a final position 14 along the nominal path NP.

According to a further aspect of the present invention, a procedure is provided for the selective management of the alarms of at least a part 2 of an automatic machine 1 for the production or packaging of consumer articles.

The procedure comprises the step of determining, only once, the interference matrix 11, which indicates, for each position of an actuator the presence or absence of interference relative to all the possible positions of the other actuators (and vice versa).

Advantageously, the method furthermore comprises the step of checking, upon occurrence of an alarm of an actuator AM and by means of the interference matrix 11, for the presence or absence of any actuators RM at risk, which, during their own nominal movement, risk interfering with the actuator AM subjected to the alarm. In other words, this step involves checking whether the actuator AM subjected to the alarm is in a position of possible interference relative to each of the other actuators RM, FM of the automatic machine 1, thus determining any actuators RM at risk. For example, when an alarm occurs on the actuator 4 of the wheel 6 (such as an overload, an excessive following error, the breakdown of an electronic element, overheating, etc.) the interference matrix 11 relative to the motor subjected to the alarm is interrogated (or all the matrices 11 relative to the same motor) in order to verify the presence or absence of any actuators RM at risk of interference (such as, in this case, the actuator 5 of the pusher 8), i.e. those actuators which, if they continued production normally following their nominal movements, would risk colliding when entering (referring to the interference matrix 11) interference areas, marked with the symbol X.

More precisely, an actuator RM at risk is considered such if the actuator subjected to the alarm is currently in an interference position (i.e., marked with the symbol X) within the interference matrix 11.

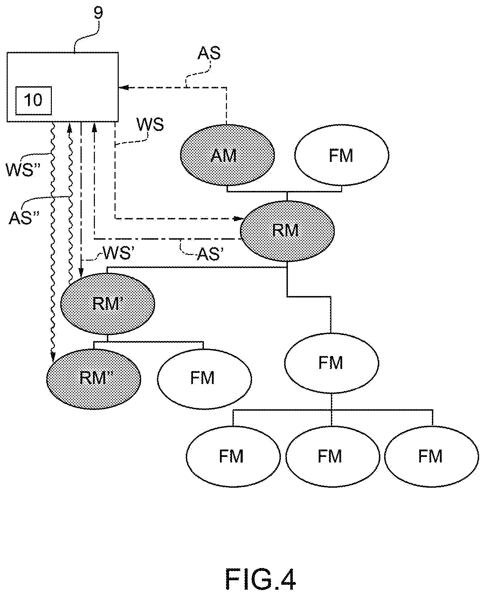

Advantageously but not necessarily, if the actuator AM subjected to the alarm is in an interference position for at least one actuator RM at risk, or if at least one actuator RM at risk exists, the procedure comprises the further step of propagating (i.e., transmitting, communicating) a warning signal WS to each actuator RM at risk. In particular, as illustrated in the non-limiting embodiment of Figure 4, the actuators which do not receive the warning signal, that is, the free actuators FM, normally continue the production of the consumer articles (packets 3).

In the non-limiting embodiment of Figure 4, the actuator AM subjected to the alarm sends an alarm signal AS to the control unit 9. In particular, the control unit 9, following the reception of the alarm signal AS by the actuator AM subjected to the alarm, verifies the presence or absence of any actuators RM at risk by interrogating the interference matrix 11 relative to the actuator AM subjected to the alarm.

Advantageously but not necessarily, the procedure comprises the further step of processing, by the control unit 9, a modified movement MM for each actuator RM at risk. In particular, the control unit 9 processes the modified movement MM, different from the nominal movement NM, for each actuator RM at risk, preventing the same from occupying at least partially the position in which the actuator AM is subjected to the alarm.

Advantageously but not necessarily, the procedure comprises the further step of controlling, by the control unit 9, the respective modified movement MM to each actuator RM at risk.

In some non-limiting cases, the modified movement MM ends with the stopping of the actuator RM at risk, in particular by the maximum acceleration (intended as a speed variation in negative terms, i.e., deceleration) possible (taking into account the physical limitations of the actuator, any fragility of the product, the structure of the mechanical parts connected to the actuator, etc.). In this way, the risks deriving from the sudden occurrence of an alarm from the actuator AM are reduced, since the actuator at risk is stopped in the shortest time and in the shortest possible space, thus avoiding any interference with the actuator AM subjected to the alarm.

In other non-limiting cases, the modified movement MM comprises a step of bypassing the position occupied by the actuator AM subjected to the alarm (comprising, obviously, the mechanical parts connected thereto). For example, in the event that the processing comprises a system with several degrees of freedom (at least three) such as an anthropomorphic robot, the processing of a consumer article can continue by bypassing the position occupied by the actuator subjected to the alarm or by the mechanical parts connected thereto. More precisely, the modified movement MM processed and driven, by the control unit 9, to the actuator RM at risk (in this case the anthropomorphic robot or the motors that make up its kinematic chain) comprises an obstacle bypassing step determined by the actuator subjected to the alarm.

According to some non-limiting embodiments not illustrated, the initial position and the final position of the modified movement MM correspond to the initial position 13 and the final position 14, respectively, of the nominal movement of the respective actuator RM at risk. In other words, the bypassing step represents only a portion of the modified path MM, which is processed by the control unit to allow the actuator RM at risk to complete the same processing (in particular at the same time) used to perform the nominal movement NM.

Advantageously but not necessarily, the modified movement MM of each actuator, if the mechanics of the part 2 allows it, is calculated so as to stop the actuator at risk in step (and to be able to quickly resume production following the resolution of the error).

In some non-limiting cases, for example if the production of packets 3 cannot continue following an alarm from the actuator AM subjected to the alarm, all the free actuators FM (i.e., not at risk and not subjected to the alarm) are stopped in step (or in known positions), so as to be able to immediately resume production once the triggering alarm of the actuator AM subjected to the alarm has been resolved.

Advantageously but not necessarily, the method comprises the further step of hierarchically checking, (following the spreading of the warning signal WS to each actuator RM at risk of interference with the actuator AM subjected to the alarm), the presence or absence of any further actuators RM', RM'' at risk, other than the actuator AM subjected to the alarm, which, during their own nominal movement, risk interfering with the actuator RM at risk to which the warning signal WS was spread. In other words, the control unit 9 checks whether each actuator RM at risk is in turn in an interference position with at least one possible position of a further actuator RM', RM'' at risk (other than the actuator subjected to the alarm, which is obviously in potential interference with the actuator RM at risk) causing any further actuators RM', RM'' at risk, which, during their own nominal movement, risk interfering with the actuator RM at risk to which the warning signal WS was spread.

In greater detail, the method comprises the further step of hierarchically spreading, in a cascade-like manner, the warning signal WS', WS'' to further actuators RM', RM'' at risk.

According to some non-limiting embodiments, all the actuators RM, RM', RM'' at risk to which the warning signal WS, WS', WS'' was spread are stopped by the control unit 9. In particular, said step takes place by driving them to make a respective modified movement MM comprising the maximum deceleration possible for each of them. More precisely, the actuators that do not receive the warning signal normally continue the production of the consumer articles, so as to avoid wasting material, empty the machine 1 and allow a possible production restart without necessarily turning off the automatic machine 1.

According to some non-limiting embodiments, the interference matrix has a dimension for each actuator 4, 5. With reference to Figure 3, it can in fact be noted that the interference matrix 11 has two dimensions since only the actuators 4 and 5 are provided. If the part of the automatic machine 1 comprised three actuators, the interference matrix (not illustrated) would be three-dimensional, with a dimension for each actuator indicating all the possible positions of an actuator.

Therefore, in general, if part 2 of automatic machine 1 has "k" actuators, the relative interference matrix will have "k" dimensions. By defining as $n_i$ the number of possible positions of an i$^{th}$ actuator (in the case of Figure 3 $n_4$ denotes the number of positions of the actuator 4 while $n_5$ denotes the number of positions of actuator 5), the quantity Q of boxes indicating positions of interference or non-interference will be equal to:

$$Q = \prod_{i=1}^{k} n_i$$

The number of positions of an i$^{th}$ actuator $n_i$, may be less than or equal to the actual number of positions that the i$^{th}$ actuator can assume. Obviously, the higher $n_i$ is, the higher the resolution of the procedure.

According to some non-limiting embodiments, the positions of each actuator 4, 5 are limited to the number 360, so that the entire stroke S of the pusher 8, as well as a complete rotation of the wheel 6, are divided into 360 parts, so that the interference matrix 11 has 360 rows and 360 columns (in the case of two-dimensional interference matrix 11).

According to other non-limiting embodiments, the automatic machine 1 is divided into groups, each of which comprises a pair of actuators and a corresponding two-dimensional interference matrix 11 is defined for each group. According to these non-limiting embodiments, the two-dimensional interference matrices 11 are used individually and recursively to verify the presence or absence of actuators RM, RM', RM" at risk with the same methods previously illustrated in the case of the interference matrix 11 only for the two actuators 4 and 5 (Figure 3).

Advantageously but not necessarily, and as illustrated in the non-limiting embodiment of Figure 3, the modified movement MM is obtained by means of a path MP', MP" defined on the interference matrix 11 from a warning position 15 (i.e., the position in the which the alarm occurs and the warning signal WS is spread) of the actuators 4 and 5 to a stop position 16', 16" (wherein the modified movement MM of the actuator RM at risk ends). In particular, the modified movement MM of the actuator RM occurs along a dimension (for example a row, as in the embodiment of Figure 3 or a column) of the interference matrix 11.

According to some non-limiting embodiments not illustrated, the modified path MP', MP" is defined by using optimization algorithms (for example algorithms for the search of the shortest paths that take into account the percentage of the risk of interference between the various actuators AM, RM, RM, RM").

According to other non-limiting embodiments not illustrated, the modified path MP', MP" is defined by using trajectories derived from interpolation functions, in particular polynomial, trigonometric functions or splines. Even more specifically, these trajectories are of the fifth or seventh order, so as to ensure continuity, respectively, to acceleration and jerk. In this way, it is possible to link the initial 13 and final 14 positions to the modified movement carried out during the bypassing step.

In some non-limiting cases, the alarm of the actuator AM occurs due to a malfunction of an electrical/-electronic component of the part 2 of the automatic machine 1.

In other non-limiting cases, the alarm of the actuator AM occurs at a deviation (beyond a given threshold) from the nominal path NP carried out by the actuators 4 and 5 on the interference matrix 11.

In the non-limiting embodiment of Figure 3, three possible paths NP, MP' and MP'' are illustrated. The path NP indicates the nominal path carried out on the interference matrix 11 by combining the positions of the actuators 4 and 5 during their nominal movements NM (i.e., standard, during the manufacturing of the consumer articles). The paths MP' and MP" indicate two examples of modified paths, carried out following an alarm from the actuator 5 (which uses two boxes 12 in order to stop) and a warning signal WS occurred in the warning position 15. In the case of the movement MP', the modified movement MM' provides for the distancing from the interference areas (denoted by the X symbol) for greater prevention, therefore, the stop position will be position 16'. In the case, on the other hand, of the movement MP", the modified movement MM'' provides for the immediate stopping (i.e., with the greatest deceleration possible) or the non-starting of the actuator 4, therefore, the stop position will be the position 16".

Advantageously but not necessarily, the procedure for the selective management of the alarms provides for storing the interference matrix 11 in the memory 10 of the control unit 9 (schematically illustrated in Figure 1) of the automatic machine 1 which is designed to control the actuators 4 and 5.

Obviously, the procedure described up to now for simplicity with only the two actuators 4 and 5 is applied in the same way also in the case of three or more actuators.

In some cases, and as illustrated in the non-limiting embodiment of Figure 4, the actuator AM subjected to the alarm sends an alarm signal AS to the control unit 9, which interrogates the interference matrix 11 stored in the memory 10 to determine the presence or absence of actuators RM at risk. In this case, a warning message WS is sent to the actuator RM at risk, following (or simultaneously with) which the control unit processes and drives the modified movement MM to the actuator RM at risk. At the same time, the actuator RM at risk sends to the control unit 9 a further alarm signal AS', which interrogates the interference matrices relative to the actuator RM at risk (different from the one in common with the actuator AM subjected to the alarm) to determine any further actuators RM' at risk, to which a further warning signal WS' is communicated (together with a respective modified movement). Recursively (in a cascade-like manner), the further actuators RM' at risk will send a further alarm signal AS" to the control unit 9, which interrogates the interference matrices relative to the further actuator RM' at risk (different from the one in common with the actuator RM at risk) to determine any nth actuators RM" at risk, to which a nth warning signal WS" is communicated (together with a respective modified movement). The cascade-like manner described up to now continues until all the actuators at risk of the automatic machine have received the respective warning signal (and the respective modified movement).

In other non-limiting cases, the cascade-like manner of warning signals is sent directly by the control unit 9, which controls in a single operating cycle all the actuators at risk (further and nth) which will be determined by the condition of the actuator AM subjected to the alarm. In other words, the control unit autonomously interrogates all the interference matrices potentially affected by the alarm of the actuator AM and simultaneously sends warning signals to any actuators at risk (further and nth).

In the preferred and non-limiting embodiment illustrated in Figure 1, the articles for the tobacco industry processed by the automatic machine 1 are packets 3 of cigarettes. According to different embodiments not illustrated, the automatic machine 1 is of a different type (for example a packaging machine, a cellophane wrapping machine, or a packing machine, a food machine, a machine for sanitary absorbent articles, etc.) and therefore the articles are cigarettes, filter pieces, tobacco packets, cigars, diapers, chocolates, etc.

Although the invention described above makes particular reference to a very precise embodiment, it is not to be considered limited to this embodiment, since all those variations, modifications or simplifications that would be evident to an expert skilled in the art, such as for example: the addition of further actuators, the use on another type of machine in the tobacco industry other than a packaging machine, an alarm other than those described (but which could however affect the production, for example a so-called "warning"), the use of sets of movements generated with trajectories or algorithms other than those mentioned, etc.

The present invention has multiple advantages.

Firstly, it allows to drastically reduce the number of repositioning necessary to resume the functional state of an automatic machine following an alarm, as the actuators actually stopped are those at risk of interference, while all the others continue production or stop in phase in a controlled way (thus allowing a rapid resumption of the production of the articles). All this involves a significant reduction in production resumption times, with a consequent increase in the productivity of the automatic machine.

Furthermore, by continuing the production of consumer articles with all the actuators not affected by possible interference with the actuator subjected to the alarm (or with the actuators at risk), the number of semi-finished articles to be discarded due to cycles of unfinished processing is reduced (or nulled). The result is a further increase in productivity and a significant reduction in waste from an economic and environmental point of view.

## Claims

1. A procedure for the selective management of the alarms of at least part (2) of an automatic machine (1) for manufacturing or packing consumer articles;

    the automatic machine (1) comprising a plurality of actuators, each capable of assuming a plurality of different positions and moving, during the manufacturing, with a nominal movement (NM) of its own;
    the procedure comprises the steps of:

    determining, only once, an interference matrix (11), which indicates, for each position of an actuator (4, 5), the presence or absence of interferences relative to the possible positions of the other actuators;
    checking, upon occurrence of an alarm of said actuator (4, 5) and by means of the interference matrix (11); for the presence or absence of actuators (RM) at risk, which, during their own nominal movement (NM), risk interfering with the actuator (AM) subjected to the alarm.

2. The procedure according to claim 1 and comprising the further step of spreading, in case there are actuators at risk, a warning signal (WS, WS', WS") to each actuator (RM) at risk; in particular, the actuators that do not receive the warning signal (WS, WS', WS") normally continue the production of the articles.

3. The procedure according to claim 1 or 2 and comprising the further step of processing, by means of a control unit (9) a modified movement (MM) for each actuator (RM) at risk; in particular, the control unit (9) processes the modified movement (MM), which is different from the nominal movement (NM), for each actuator (RM) at risk preventing each actuator (RM) at risk from at least partially occupying the position where the actuator (AM) subjected to the alarm is

4. The procedure according to claim 3 and comprising the further step of driving, through the control unit (9), each actuator (RM) at risk to make the respective modified movement (MM) .

5. The procedure according to claim 3 or 4, wherein the modified movement (MM) ends by stopping the actuator (RM) at risk, in particular through the maximum deceleration possible.

6. The procedure according to claim 3 or 4, wherein the modified movement (MM) comprises a step of bypassing the position occupied by the actuator (AM) subjected to the alarm.

7. The procedure according to claim 6, wherein the initial position and the final position of the modified movement (MM) correspond, respectively, to the initial position and the final position of the nominal movement (NM) of the respective actuator (RM) at risk.

8. The procedure according to any one of the claims from 2 to 7 and comprising the step of hierarchically checking, following the spreading of the warning signal (WS, WS', WS'') to each actuator (RM) at risk, for the presence or the absence of possible further actuators (RM', RM") at risk, other than the actuator (AM) subjected to the alarm, which, during their own nominal movement (NM), risk interfering with the actuator (RM) at risk to which the warning signal (WS, WS', WS") was spread.

9. The procedure according to claim 8 and comprising the step of hierarchically spreading, in a cascade-like manner, the warning signal (WS, WS', WS") to the possible further actuators (RM', RM") at risk.

10. The procedure according to any one of the claims from 2 to 9, wherein all the actuators at risk (RM, RM', RM") to which the warning signal (WS, WS', WS") was spread are stopped; in particular driving them to make a respective modified movement (MM) comprising the maximum deceleration possible for each of them; the actuators (FM) that do not receive the warning signal (WS, WS', WS") normally continue the production of the articles.

11. The procedure according to any one of the preceding claims, wherein the interference matrix (11) has a dimension for each actuator (4, 5).

12. The procedure according to any one of the preceding claims, wherein the modified movement (MM) is obtained by means of a modified path defined on the interference matrix (11) from an actuator warning position (15) to a stop position (16, 16', 16"); in particular along a dimension of the interference matrix (11).

13. The procedure according to claim 12, wherein the modified path is defined by using optimization algorithms, in particular algorithms for the search of the shortest paths, and/or using trajectories deriving from interpolation functions, in particular polynomial functions, trigonometric functions or splines.

14. The procedure according to any one of the preceding claims, wherein:

   the automatic machine (1) is divided into groups, each comprising a pair of actuators; and
   a corresponding two-dimensional interference matrix (11) is defined for each group.

15. An automatic machine (1) for manufacturing consumer articles; the automatic machine (1) comprises:

   a plurality of actuators, each capable of assuming a plurality of different positions; and
   a control unit (9), which is configured to control the actuators; wherein the control unit (9) comprises a memory (10), in which an interference matrix (11) is stored, which indicates, for each position of an actuator (4, 5), the presence or absence of interferences relative to all the possible positions of the other actuators;
   the automatic machine being **characterised in that** the control unit (9) is configured for checking, upon occurrence of an alarm of said actuator (4, 5) and by means of the interference matrix (11); for the presence or absence of actuators (RM) at risk, which, during their own nominal movement (NM), risk interfering with the actuator (AM) subjected to the alarm;
   the automatic machine (1) being configured to carry out the method according to one of the claims from 1 to 14.

**Patentansprüche**

1. Verfahren für das selektive Management der Alarme zumindest eines Abschnitts (2) einer automatischen Maschine (1) zum Herstellen oder Verpacken von Verbrauchererzeugnissen;

   wobei die automatische Maschine (1) mehrere Aktoren umfasst, die jeweils in der Lage sind, mehrere verschiedene Positionen einzunehmen und sich während der Herstellung mit einer eigenen Nennbewegung (NM) zu bewegen;
   wobei das Verfahren die Schritte umfasst:

Bestimmen, lediglich einmalig, einer Beeinflussungsmatrix (11), die für jede Position eines Aktors (4, 5) das Vorhandensein oder Nichtvorhandensein von Beeinflussungen in Bezug auf die möglichen Positionen der anderen Aktoren angibt;

Prüfen, bei Auftreten eines Alarms des Aktors (4, 5) und mittels der Beeinflussungsmatrix (11) auf das Vorhandensein oder Nichtvorhandensein von gefährdeten Aktoren (RM), die während ihrer eigenen Nennbewegung (NM) riskieren, mit dem Aktor (AM), der von dem Alarm betroffen ist, in Beeinflussung zu gelangen.

**2.** Verfahren nach Anspruch 1, und umfassend den weiteren Schritt des Weitergebens, im Fall, dass es gefährdete Aktoren gibt, eines Warnsignals (WS, WS', WS") an jeden gefährdeten Aktor (RM); insbesondere wobei die Aktoren, die das Warnsignal (WS, WS', WS") nicht empfangen, die Produktion der Erzeugnisse regulär fortsetzen.

**3.** Verfahren nach Anspruch 1 oder 2, und umfassend den weiteren Schritt des Verarbeitens einer modifizierten Bewegung (MM) für jeden gefährdeten Aktor (RM) mittels einer Steuereinheit (9); insbesondere wobei die Steuereinheit (9) die modifizierte Bewegung (MM), die sich von der Nennbewegung (NM) unterscheidet, für jeden gefährdeten Aktor (RM) verarbeitet, wobei verhindert wird, dass jeder gefährdete Aktor (RM) zumindest teilweise die Position einnimmt, an der der Aktor (AM), der von dem Alarm betroffen ist, angeordnet ist.

**4.** Verfahren nach Anspruch 3, und umfassend den weiteren Schritt des Antreibens jedes gefährdeten Aktors (RM) durch die Steuereinheit (9), derart, um die jeweilige modifizierte Bewegung (MM) zu machen.

**5.** Verfahren nach Anspruch 3 oder 4, wobei die modifizierte Bewegung (MM) durch Anhalten des gefährdeten Aktors (RM); insbesondere durch die maximale mögliche Verzögerung, endet.

**6.** Verfahren nach Anspruch 3 oder 4, wobei die modifizierte Bewegung (MM) einen Schritt des Umgehens der Position, die durch den Aktor (AM), der von dem Alarm betroffen ist, eingenommen wird, umfasst.

**7.** Verfahren nach Anspruch 6, wobei die Anfangsposition und die Endposition der modifizierten Bewegung (MM) jeweils der Anfangsposition und der Endposition der Nennbewegung (NM) des jeweiligen gefährdeten Aktors (RM) entsprechen.

**8.** Verfahren nach einem der Ansprüche von 2 bis 7, und umfassend den Schritt des hierarchischen Prüfens, in Folge des Weitergebens des Warnsignals (WS, WS', WS") an jeden gefährdeten Aktor (RM), auf das Vorhandensein oder das Nichtvorhandensein möglicher weiterer gefährdeter Aktoren (RM', RM") als des Aktors (AM), der von dem Alarm betroffen ist, die während ihrer eigenen Nennbewegung (NM) riskieren, mit dem gefährdeten Aktor (RM), an den das Warnsignal (WS, WS', WS") weitergegeben wurde, in Beeinflussung zu gelangen.

**9.** Verfahren nach Anspruch 8, und umfassend den Schritt des hierarchischen Weitergebens des Warnsignals (WS, WS', WS") auf eine kaskadenartige Weise an die möglichen weiteren gefährdeten Aktoren (RM', RM") umfasst.

**10.** Verfahren nach einem der Ansprüche von 2 bis 9, wobei alle gefährdeten Aktoren (RM, RM', RM"), an die das Warnsignal (WS, WS', WS") weitergegeben wurde, angehalten werden; insbesondere wobei sie insbesondere derart angetrieben werden, um eine jeweilige modifizierte Bewegung (MM) zu machen, die die maximale Verzögerung, die für jeden von ihnen möglich ist, umfasst; wobei die Aktoren (FM), die das Warnsignal (WS, WS', WS") nicht empfangen, die Produktion der Erzeugnisse regulär fortsetzen.

**11.** Verfahren nach einem der vorhergehenden Ansprüche, wobei die Beeinflussungsmatrix (11) eine Dimension für jeden Aktor (4, 5) aufweist.

**12.** Verfahren nach einem der vorhergehenden Ansprüche, wobei die modifizierte Bewegung (MM) mittels eines modifizierten Wegs erhalten wird, der auf der Beeinflussungsmatrix (11) ausgehend von einer Aktorwarnposition (15) zu einer Anhalteposition (16, 16', 16"); insbesondere entlang einer Dimension der Beeinflussungsmatrix (11), definiert ist.

**13.** Verfahren nach Anspruch 12, wobei der modifizierte Weg unter Verwendung von Optimierungsalgorithmen, insbesondere von Algorithmen für die Suche nach den kürzesten Wegen, und/oder unter Verwendung von Trajektorien, die sich von Interpolationsfunktionen, insbesondere Polynomfunktionen, trigonometrischen Funktionen oder Splines, herleiten, definiert wird.

**14.** Verfahren nach einem der vorhergehenden Ansprüche, wobei:

die automatische Maschine (1) in Gruppen aufgeteilt ist, die jeweils ein Paar Aktoren umfassen, und

eine entsprechende zweidimensionale Beeinflussungsmatrix (11) für jede Gruppe definiert ist.

**15.** Automatische Maschine (1) zum Herstellen von Verbrauchererzeugnissen; wobei die automatische Maschine (1) umfasst:

mehrere Aktoren, die jeweils in der Lage sind, mehrere verschiedene Positionen einzunehmen; und

eine Steuereinheit (9), die konfiguriert ist, die Aktoren zu steuern; wobei die Steuereinheit (9) einen Speicher (10) umfasst, in dem eine Beeinflussungsmatrix (11) gespeichert ist, die für jede Position eines Aktors (4, 5) das Vorhandensein oder Nichtvorhandensein von Beeinflussungen in Bezug auf alle möglichen Positionen der anderen Aktoren angibt;

wobei die automatische Maschine **dadurch gekennzeichnet ist, dass** die Steuereinheit (9) konfiguriert ist, bei Auftreten eines Alarms des Aktors (4, 5) und mittels der Beeinflussungsmatrix (11), auf das Vorhandensein oder Nichtvorhandensein von gefährdeten Aktoren (RM) zu prüfen, die während ihrer eigenen Nennbewegung (NM) riskieren, mit dem Aktor (AM), der von dem Alarm betroffen ist, in Beeinflussung zu gelangen;

wobei die automatische Maschine (1) konfiguriert ist, das Verfahren nach einem der Ansprüche von 1 bis 14 auszuführen.

**Revendications**

**1.** Procédure pour la gestion sélective des alarmes d'au moins une partie (2) d'une machine automatique (1) pour fabriquer ou emballer des articles de consommation ;

la machine automatique (1) comprenant une pluralité d'actionneurs, chacun capable d'adopter une pluralité de positions différentes et de se déplacer, pendant la fabrication, avec un déplacement nominal (NM) qui lui est propre ;
la procédure comprend les étapes consistant à :

déterminer, une seule fois, une matrice d'interférences (11), qui indique, pour chaque position d'un actionneur (4, 5), la présence ou l'absence d'interférences par rapport aux positions possibles des autres actionneurs ;
vérifier, lors de la survenue d'une alarme dudit actionneur (4, 5) et au moyen de la matrice d'interférences (11) ; la présence ou l'absence d'actionneurs (RM) à risque, qui, pendant leur propre déplacement nominal (NM), risquent d'interférer avec l'actionneur (AM) faisant l'objet de l'alarme.

**2.** Procédure selon la revendication 1 et comprenant l'étape supplémentaire consistant à propager, dans un cas où il y a des actionneurs à risque, un signal d'avertissement (WS, WS', WS") à chaque actionneur (RM) à risque ; en particulier, les actionneurs qui ne reçoivent pas le signal d'avertissement (WS, WS', WS") continuent normalement la production des articles.

**3.** Procédure selon la revendication 1 ou 2 et comprenant l'étape supplémentaire consistant à traiter, au moyen d'une unité de commande (9), un déplacement modifié (MM) pour chaque actionneur (RM) à risque ; en particulier, l'unité de commande (9) traite le déplacement modifié (MM), qui est différent du déplacement nominal (NM), pour chaque actionneur (RM) à risque empêchant chaque actionneur (RM) à risque d'occuper au moins partiellement la position où l'actionneur (AM) faisant l'objet de l'alarme est situé.

**4.** Procédure selon la revendication 3 et comprenant l'étape supplémentaire consistant à entraîner, par le biais de l'unité de commande (9), chaque actionneur (RM) à risque pour effectuer le déplacement modifié (MM) respectif.

**5.** Procédure selon la revendication 3 ou 4, dans laquelle le déplacement modifié (MM) se termine en arrêtant l'actionneur (RM) à risque, en particulier par le biais du ralentissement maximal possible.

**6.** Procédure selon la revendication 3 ou 4, dans laquelle le déplacement modifié (MM) comprend une étape consistant à éviter la position occupée par l'actionneur (AM) faisant l'objet de l'alarme.

**7.** Procédure selon la revendication 6, dans laquelle la position initiale et la position finale du déplacement modifié (MM) correspondent, respectivement, à la position initiale et la position finale du déplacement nominal (NM) de l'actionneur (RM) respectif à risque.

**8.** Procédure selon l'une quelconque des revendications 2 à 7 et comprenant l'étape consistant à vérifier hiérarchiquement, suite à la propagation du signal d'avertissement (WS, WS', WS") à chaque actionneur (RM) à risque, la présence ou l'absence d'actionneurs (RM', RM") supplémentaires possibles à risque, autres que l'actionneur (AM) faisant l'objet de l'alarme, qui, pendant leur propre déplacement nominal (NM), risquent d'interférer avec l'actionneur (RM) à risque auquel le signal d'avertissement (WS, WS', WS") a été propagé.

**9.** Procédure selon la revendication 8 et comprenant l'étape consistant à propager hiérarchiquement, d'une manière semblable à une cascade, le signal d'avertissement (WS, WS', WS") aux actionneurs (RM', RM") supplémentaires possibles à risque.

10. Procédure selon l'une quelconque des revendications 2 à 9, dans laquelle tous les actionneurs (RM, RM', RM") à risque auxquels le signal d'avertissement (WS, WS', WS") a été propagé sont arrêtés ; en particulier en les entraînant pour effectuer un déplacement modifié (MM) respectif comprenant le ralentissement maximal possible pour chacun d'eux ; les actionneurs (FM) qui ne reçoivent pas le signal d'avertissement (WS, WS', WS") continuent normalement la production des articles.

11. Procédure selon l'une quelconque des revendications précédentes, dans laquelle la matrice d'interférences (11) a une dimension pour chaque actionneur (4, 5).

12. Procédure selon l'une quelconque des revendications précédentes, dans laquelle le déplacement modifié (MM) est obtenu au moyen d'un chemin modifié défini sur la matrice d'interférences (11) depuis une position d'avertissement d'actionneur (15) jusqu'à une position d'arrêt (16, 16', 16'') ; en particulier le long d'une dimension de la matrice d'interférences (11).

13. Procédure selon la revendication 12, dans laquelle le chemin modifié est défini en utilisant des algorithmes d'optimisation, en particulier des algorithmes pour la recherche des chemins les plus courts, et/ou en utilisant des trajectoires provenant de fonctions d'interpolation, en particulier de fonctions polynomiales, de fonctions trigonométriques ou de splines.

14. Procédure selon l'une quelconque des revendications précédentes, dans laquelle :

la machine automatique (1) est divisée en groupes, chacun comprenant une paire d'actionneurs ; et
une matrice d'interférences (11) bidimensionnelle correspondante est définie pour chaque groupe.

15. Machine automatique (1) pour fabriquer des articles de consommation ; la machine automatique (1) comprend :

une pluralité d'actionneurs, chacun capable d'adopter une pluralité de positions différentes ; et
une unité de commande (9), qui est configurée pour commander les actionneurs ;
dans laquelle l'unité de commande (9) comprend une mémoire (10), dans laquelle une matrice d'interférences (11) est stockée, qui indique, pour chaque position d'un actionneur (4, 5), la présence ou l'absence d'interférences par rapport à toutes les positions possibles des autres actionneurs ;
la machine automatique étant **caractérisée en ce que** l'unité de commande (9) est configurée pour vérifier, lors de la survenue d'une alarme dudit actionneur (4, 5) et au moyen de la matrice d'interférences (11) ; la présence ou l'absence d'actionneurs (RM) à risque, qui, pendant leur propre déplacement nominal (NM), risquent d'interférer avec l'actionneur (AM) faisant l'objet de l'alarme ;
la machine automatique (1) étant configurée pour réaliser la méthode selon l'une des revendications 1 à 14.

FIG.1

FIG.2

FIG.3

FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102020000003482
- WO 2019202568 A